# FASCICULE DE BREVET EUROPEEN

(11) **EP 0 940 164 B1**
(45) Date de publication et mention de la délivrance du brevet: **20.04.2005**
(21) Numéro de dépôt: 99400500.7
(22) Date de dépôt: 02.03.1999
(51) Int. Cl.: B01D 53/047

(54) **Procédé de séparation par adsorption d'un mélange gazeux**
Verfahren zur Trennung einer Gasmischung durch Adsorption
Process for separating a gas mixture by adsorption

(30) Priorité: 06.03.1998 FR 9802785
(43) Date de publication de la demande: 08.09.1999
(73) Titulaire: L'air Liquide, S.A. à Directoire et Conseil de Surveillance pour l'Etude et l'Exploitation des Procédés Georges Claude, 75321 Paris Cedex 07 (FR)
(72) Inventeur: Monereau, Christian, 75011 Paris (FR)
(74) Mandataire: Le Moenner, Gabriel

(56) Documents cités:
- EP-A- 0 689 862
- FR-A- 2 750 888
- GB-A- 2 053 020
- US-A- 5 248 322
- PATENT ABSTRACTS OF JAPAN vol. 016, no. 164 (C-0931), 21 avril 1992 & JP 04 011919 A (EBARA CORP), 16 janvier 1992

## Description

La présente invention est relative à un procédé de séparation par adsorption d'un mélange gazeux dans au moins un adsorbeur par mise en oeuvre d'un cycle de variation de pression comportant une succession d'étapes au moyen d'au moins une machine de compression.

L'invention s'applique notamment à la production d'oxygène à partir d'air atmosphérique et, dans la suite, on se référera à cette application à titre d'exemple préférentiel.

L'invention peut être mise en oeuvre avec tous les types de cycles d'adsorption à variation de pression, par exemple aux cycles suivants :
- les cycles dits VSA (Vaccum Swing Adsorption), dans lesquels l'adsorption s'effectue sensiblement à la pression atmosphérique et la pression minimale du cycle est nettement inférieure à cette pression atmosphérique et typiquement de l'ordre de 250 à 400 mbar. Ces cycles sont généralement mis en oeuvre au moyen d'unités à trois adsorbeurs.
- les cycles transatmosphériques dits MPSA, qui diffèrent des précédents par le fait que l'adsorption s'effectue à une pression nettement supérieure à la pression atmosphérique et typiquement de l'ordre de 1,3 à 2 bars. Ces cycles sont généralement mis en oeuvre au moyen d'unités à deux adsorbeurs.
- les cycles dits PSA (Pressure Swing Adsorption), dans lesquels l'adsorption s'effectue à une pression nettement supérieure à la pression atmosphérique, typiquement de l'ordre de 3 à 8 bars, tandis que la pression minimale du cycle est sensiblement égale à la pression atmosphérique.

Dans la suite, on utilisera l'acronyme PSA comme désignation générique de l'ensemble de ces cycles. Par ailleurs, les pressions indiquées sont des pressions absolues.

Un des moyens pour diminuer le coût de production de l'oxygène par PSA est de faire décroître sensiblement l'investissement en maintenant la consommation énergétique constante.

La réduction du temps de cycle s'inscrit dans ce schéma à partir du moment où le système considéré permet de maintenir les performances malgré des étapes plus rapides. En pratique, cela consiste à améliorer en proportion la cinétique des adsorbants, à maintenir les pertes de charge à leur niveau antérieur, à éviter les problèmes d'attrition des particules d'adsorbant.

La circulation horizontale dans les lits d'adsorbants, couplée avec l'utilisation d'adsorbants de petite granulométrie, permet de résoudre l'essentiel de ces problèmes, et les unités industrielles de ce type se développent depuis quelque temps.

Il apparaît cependant que les cycles utilisés actuellement, pour la plupart directement issus des cycles de plus longue durée en usage précédemment, sont de fait pénalisés par le fonctionnement des machines (soufflante ou compresseur d'air, pompe à vide) lors des phases transitoires correspondant au passage d'une étape à la suivante.

En effet, comme on va le montrer, la consommation énergétique supplémentaire liée à ces phases transitoires est faible pour les durées de cycle classique, mais devient significative dans le cas de cycles courts.

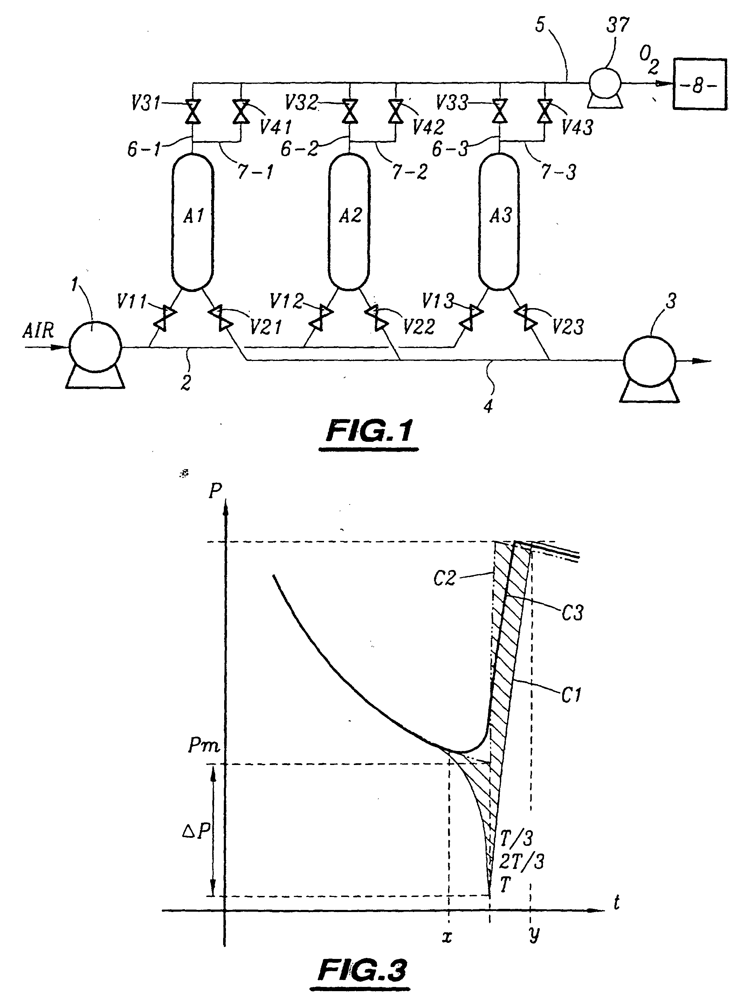

Un premier exemple de ces phénomènes va être expliqué en regard de la Figure 1 des dessins annexés, qui représente schématiquement un exemple d'installation PSA de production d'oxygène à partir d'air atmosphérique. Cette installation comprend : une soufflante 1; trois adsorbeurs A1 à A3; une ligne 2 d'alimentation en air des adsorbeurs, laquelle relie le refoulement de la soufflante aux extrémités inférieures ou entrées des adsorbeurs via des vannes respectives V11 à V13; une pompe à vide 3 dont le refoulement est relié à l'atmosphère environnante; une ligne 4 d'évacuation qui relie l'aspiration de la pompe à vide aux entrées des adsorbeurs via des vannes respectives V21 à V23; et une ligne 5 de circulation d'oxygène reliée à l'extrémité supérieure ou sortie de chaque adsorbeur par deux piquages en parallèle : des piquages respectifs 6-1 à 6-3 équipés de vannes respectives V31 à V33, pour la production d'oxygène, et des piquages respectifs 7-1 à 7-3, équipés de vannes respectives V41 à V43, pour la repressurisation des adsorbeurs. La ligne 5 est par ailleurs reliée à un circuit de consommation d'oxygène schématisé en 8.

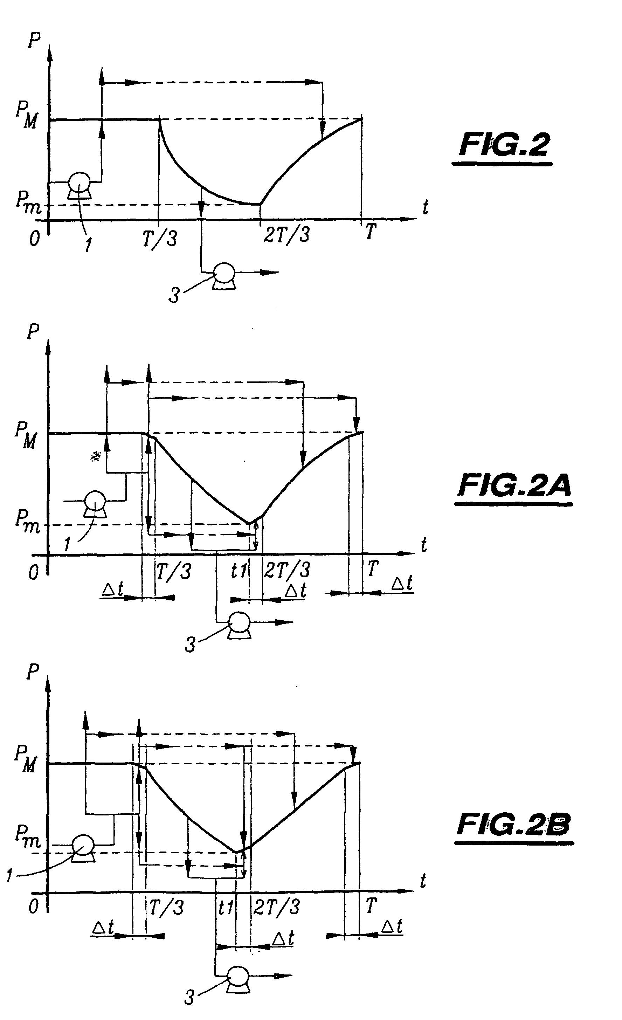

L'installation comporte par ailleurs des moyens, connus en soi et non représentés, de commande, de régulation et d'alimentation électrique, adaptés pour effectuer le cycle illustré sur la Figure 2.

La Figure 2 est un diagramme qui illustre un cycle d'adsorption typique mis en oeuvre au moyen de l'installation de la Figure 1.

Sur la Figure 2, où les temps t sont portés en abscisses et les pressions absolues P en ordonnées, les traits orientés par des flèches indiquent les mouvements et destinations des courants gazeux et, en outre, le sens de circulation dans l'adsorbeur : lorsqu'une flèche est dans le sens des ordonnées croissantes (vers le haut du diagramme), le courant est dit à co-courant, dans l'adsorbeur. Si la flèche dirigée vers le haut est située au-dessous du trait indiquant la pression dans l'adsorbeur, le courant pénètre dans l'adsorbeur par l'extrémité d'entrée de l'adsorbeur; si la flèche, dirigée vers le haut, est située au-dessus du trait indiquant la pression, le courant sort de l'adsorbeur par l'extrémité de sortie de l'adsorbeur, les extrémités d'entrée et de sortie étant respectivement celles du gaz à traiter et du gaz soutiré en phase de production; lorsqu'une flèche est dans le sens des ordonnées décroissantes (vers le bas du diagramme), le courant est dit à contre-courant, dans l'adsorbeur. Si la flèche dirigée vers le bas est située au-dessous du trait indiquant la pression de l'adsorbeur, le courant sort de l'adsorbeur par l'extrémité d'entrée de l'adsorbeur; si la flèche dirigée vers le bas est située au-dessus du trait indiquant la pression, le courant pénètre dans l'adsorbeur par l'extrémité de sortie de l'adsorbeur, les extrémités d'entrée et de sortie étant toujours celles du gaz à traiter et du gaz soutiré en phase de production.

Le cycle de la Figure 2, dont la période T est, à titre d'exemple, d'environ 270s, est constitué essentiellement de trois étapes successives. On le décrira ci-dessous pour un adsorbeur, par exemple l'adsorbeur A1. Pour les autres adsorbeurs, il s'en déduit par décalage dans le temps de T/3 et 2T/3 respectivement, T désignant la durée totale du cycle.
(a) De t = 0 à T/3 : étape de production sensiblement isobare à la pression haute PM du cycle, voisine de la pression atmosphérique. Au cours de cette étape, de l'air est introduit dans l'adsorbeur, via la vanne V11, et circule de son entrée à sa sortie, d'où sort l'oxygène produit. Une partie de cet oxygène est prélevé pour repressuriser un autre adsorbeur en cours d'étape de repressurisation (c) décrite plus loin, et le reste est envoyé à utilisation 8.
(b) De T3 à 2T/3, l'adsorbeur est dépressurisé ou purgé à contre-courant au moyen de la pompe à vide 3, jusqu'à atteindre la pression basse Pm du cycle, qui est typiquement de l'ordre de 0,25 à 0,40 bar.
(c) De 2T/3 à T, l'adsorbeur est repressurisé à contre-courant jusqu'à la pression PM par de l'oxygène de production provenant d'un autre adsorbeur en étape (a) d'adsorption.

Une observation de la consommation énergétique instantanée de la pompe à vide au cours d'une étape montre une augmentation régulière de cette consommation au fur et à mesure que l'adsorbeur sur lequel s'exerce cette machine descend en vide, suivie d'un pic sensible lors du passage sur l'adsorbeur suivant, qui se trouve à une pression supérieure.

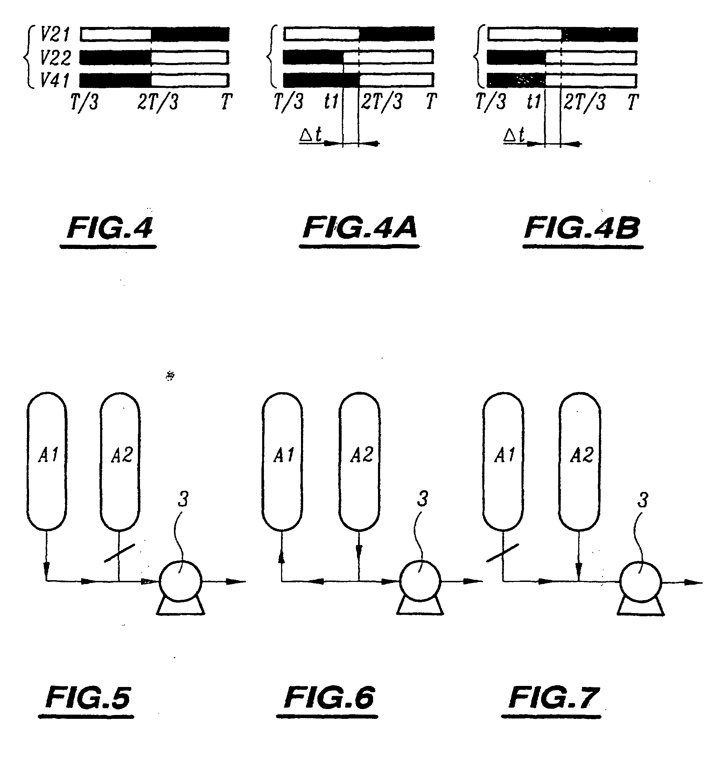

Le diagramme de la Figure 3, où le temps t est porté en abscisses et la pression P en ordonnées, illustre et permet de bien comprendre cette évolution. En effet, au voisinage de la commutation de la pompe à vide d'un adsorbeur à un autre, c'est-à-dire au voisinage des instants T/3, 2T/3 et T, il se produit une distorsion de la courbe réelle C1 par rapport à la courbe théorique C2. Plus précisément, sur cette figure 3, la durée x correspond au temps de fermeture des vannes V2i (V21 dans l'exemple), et la durée y à l'ouverture des vannes V2(i+1) (V22 dans l'exemple). Ces durées sont de l'ordre de 0,5 à 2 secondes suivant la dimension des vannes.

En pratique, pendant la période transitoire x, le débit de gaz en provenance de l'adsorbeur en fin de purge est étranglé et la pompe à vide pompe, pendant un très court instant, sur le seul volume du circuit de vide. Ce volume étant beaucoup plus faible que le volume des adsorbeurs, la pression interne de ce circuit baisse rapidement. On a observé ainsi une baisse de pression ΔP atteignant 100 mbars au-dessous de la pression basse théorique Pm du cycle. L'ouverture de la vanne de vide de l'adsorbeur suivant, qui ne commence que lorsque la fermeture de la vanne de vide du premier adsorbeur est terminée, n'étant pas non plus instantanée, il y a également un étranglement du débit pompé tant que la vanne n'est pas ouverte en grand (durée y).

Il résulte de ceci que trois fois par cycle, durant toutes les périodes transitoires telles que (T/3)-x à (T/3) + y, la pression d'aspiration de la pompe à vide est sensiblement plus basse que la pression théorique (correspondant à la pression dans les adsorbeurs, moins les pertes des charges normales du circuit de vide). Il s'ensuit une consommation énergétique supplémentaire proportionnelle à chaque instant à la différence (P réelle - P théorique) pour le type de machine couramment utilisé dans ces procédés, à savoir le plus souvent une pompe à vide de type Roots. Ce supplément a été estimé à environ 1% de l'énergie normale de pompage pour un cycle de type VSA de durée de cycle 3 x 90 s, de pression basse théorique 0,35 bar, pour un pic ΔP de 100mbar et des temps de manoeuvre de vanne de 1 seconde.

Lorsqu'on réalise le même cycle en 3 x 15 s, avec des adsorbants et une géométrie d'adsorbeurs adéquats, on utilise pour la même production que précédemment des adsorbeurs environ six fois plus petits, mais les autres équipements (soufflante d'air, pompe à vide et vannes) restent généralement inchangés. En particulier, rien n'impose que la dimension des vannes V21, V22 et V23 soit différente de celle des vannes utilisées pour le cycle 3 x 90s.

Le temps de manoeuvre des vannes demeure inchangé, et le phénomène décrit précédemment avec le pic de pression basse et le pic de surconsommation se produit également. Or, du fait que les adsorbeurs sont de taille réduite, l'implantation de l'unité 3 x 15s est plus compacte, les tuyauteries sont plus courtes et le volume du circuit de vide à tendance à être plus faible. Les effets décrits plus haut ont ainsi tendance à être amplifiés.

A supposer même qu'ils soient identiques, leur importance relative est nettement plus sensible dans le cas du cycle court. La période de surconsommation représente ainsi 2s sur 15s au lieu de 2s sur 90s précédemment. Avec les mêmes hypothèses que précédemment, ce surcoût énergétique peut ainsi représenter pour le cycle 3 x 15s jusqu'à 8% de la consommation énergétique de la pompe à vide.

On voit donc que l'effet en question, relativement secondaire pour les cycles habituels, devient important pour les cycles courts, et qu'il est nécessaire d'y remédier pour améliorer la performance énergétique de ces derniers.

Comme on le verra plus loin, un problème analogue se pose dans de nombreux autres types de cycles PSA, lors des commutations des machines de compression et/ou d'aspiration d'un adsorbeur à un autre, d'un adsorbeur à l'atmosphère ou de l'atmosphère à un adsorbeur.

L'invention a pour but d'éliminer, ou au moins de réduire de façon importante, le surcoût énergétique pendant ces phases transitoires.

A cet effet, l'invention a pour objet un procédé selon la revendication 1.

Le Document GB-A-2 053 020 décrit un déshumidificateur à deux adsorbeurs, avec régénération par circulation de gaz sec commençant par une phase d'équilibrage entre les extrémités côté sortie gaz sec des adsorbeurs.

Le Document JP-A-04/011919 décrit un système de séparation de gaz à deux adsorbeurs avec également une phase d'égalisation entre les extrémités côté sortie des adsorbeurs.
Le procédé suivant invention peut comporter une ou plusieurs des caractéristiques suivantes :
- la durée de ladite opération intermédiaire est au plus égale au tiers, et de préférence comprise entre 1/3 et 1/50^{ème}, de la plus courte des étapes du cycle qu'elle relie ;
- l'un desdits espaces est un volume de mélange gazeux à séparer, typiquement l'atmosphère environnante ;
- l'un au moins desdits espaces est une capacité de stockage de gaz;
- l'un au moins desdits espaces est un premier adsorbeur qui, pendant ladite opération intermédiaire, communique avec la machine par l'une de ses extrémités;
- pendant ladite opération intermédiaire, ledit premier adsorbeur est également mis en communication avec un troisième espace par son autre extrémité ;
- ledit troisième espace est un autre adsorbeur qui se trouve à une pression différente de celle dudit premier adsorbeur;
- la machine est une soufflante ou un compresseurd d'air, ou une pompe à vide à une seule fonction;
- la machine est adaptée pour fonctionner en compresseur d'air ou en pompe à vide suivant les étapes du cycle;
- ladite commutation s'effectue par fermeture d'une première vanne deux-voies et ouverture d'une deuxième vanne deux-voies, et ladite opération intermédiaire par ouverture de la deuxième vanne deux-voies avant fermeture de la première vanne deux-voies ;
- ladite commutation s'effectue par fermeture d'une première voie d'une vanne trois-voies et ouverture d'une deuxième voie de cette vanne trois-voies, la troisième voie de cette vanne trois-voies étant ouverte, et ladite opération intermédiaire par ouverture de la deuxième voie de la vanne trois-voies avant la fermeture de ladite première voie.

Une installation de séparation par adsorption d'un mélange gazeux, notamment d'air atmosphérique, pour mettre en oeuvre le procédé selon l'invention, comprend au moins un adsorbeur et des moyens pour mettre en oeuvre dans celui-ci un cycle de variation de pression, ces moyens comprenant une machine de compression et les moyens de liaison sélective d'au moins une borne de cette machine à un premier espace et à un deuxième espace, et comprend également des moyens de commande qui, à certains instants prédéterminés, mettent ladite borne simultanément en communication avec le premier espace et avec le deuxième espace.

Cette installation peut comporter une ou plusieurs des caractéristiques suivantes :
- lesdits moyens de liaison sélective comprennent deux vannes deux-voies, et lesdits moyens de commande sont adaptés pour ouvrir simultanément les deux vannes deux-voies auxdits instants prédéterminés;
- lesdits moyens de liaison sélective comprennent une vanne trois-voies, et lesdits moyens de commande sont adaptés pour ouvrir simultanément les trois voies de cette vanne trois-voies.

Des exemples de mise en oeuvre de l'invention vont maintenant être décrits en regard des dessins annexés, sur lesquels :
- La Figure 1 représente schématiquement une installation VSA à trois adsorbeurs pour la production d'oxygène à partir d'air atmosphérique;
- la Figure 2 est un diagramme illustrant un cycle connu mis en oeuvre au moyen de cette installation;
- la Figure 2A est un diagramme analogue à la Figure 2 illustrant une première modification du cycle conforme à l'invention;
- La Figure 2B est un diagramme analogue illustrant une seconde modification du cycle conforme à l'invention;
- la Figure 3 est un diagramme qui illustre la variation de pression à l'aspiration de la pompe à vide, dans le cas du cycle connu et dans celui d'un cycle suivant l'invention;
- la Figure 4 est un schéma qui illustre la commutation des vannes pendant une phase transitoire, dans le cas de la Figure 2;
- les Figures 4A et 4B sont des schémas analogues qui correspondent respectivement aux Figures 2A et 2B;
- les Figures 5 à 7 sont des vues schématiques partielles qui illustrent d'une autre manière une phase transitoire suivant l'invention;
- la Figure 8 est une vue schématique d'une installation à deux adsorbeurs pour la production d'oxygène à partir d'air atmosphérique;
- la Figure 9 est un diagramme analogue à la Figure 2 qui illustre un cycle connu mis en oeuvre au moyen de l'installation de la Figure 8;
- la Figure 10 est un schéma analogue à la Figure 4 qui illustre la commutation des vannes pendant une phase transitoire du compresseur, dont le cycle de la Figure 9;
- les Figures 10A et 10B sont des schémas analogues correspondant respectivement à deux modifications du cycle conformes à l'invention;
- la Figure 11 est un diagramme analogue à la Figure 3 qui illustre le phénomène de surconsommation du compresseur pendant les phases transitoires dans le cycle de la Figure 9, ainsi que l'amélioration apportée par l'invention;
- les Figures 12 à 14 sont des vues schématiques analogues aux Figures 5 à 7 mais correspondant à l'installation de la Figure 8;
- la Figure 15 représente schématiquement une installation du type monoadsorbeur pour la production d'oxygène à partir d'air atmosphérique;
- la Figure 16 est un diagramme analogue à la Figure 2 qui illustre un cycle connu mis en oeuvre au moyen de l'installation de la Figure 15;
- les Figures 17 à 19 sont des vues schématiques partielles qui illustrent d'une autre manière la commutation classique des vannes à la fin de la phase de purge/élution;
- les Figures 17A à 19A sont des vues analogues correspondant à la mise en oeuvre de l'invention;
- les Figures 20 à 22 sont des vues analogues aux Figures 17 à 19 respectivement, illustrant la commutation classique des vannes à la fin de la phase d'adsorption;
- les Figures 20A à 22A sont des vues analogues correspondant à la mise en oeuvre de l'invention;
- les Figures 23 à 25 sont des vues schématiques partielles qui illustrent l'utilisation d'une vanne trois-voies pour assurer la commutation de la pompe à vide conforme à l'invention, dans le cas de l'installation de la Figure 8; et
- la Figure 26 représente l'utilisation de deux vannes trois-voies dans l'installation de la Figure 15 pour la mise en oeuvre de l'invention.

On se référera maintenant, pour la facilité de l'exposé, aux Figures 4, 4A, 4B, sur lesquelles l'état ouvert des vannes est représenté en blanc et leur état fermé en grisé. Dans la technique classique, dans une installation par exemple à deux adsorbeurs, en considérant par exemple l'adsorbeur A1, l'étape (b) de purge s'effectue, de T3 à 2T/3, avec la vanne V21 ouverte tandis que les vannes V22 et V23 sont fermées. A l'instant 2T/3, aux durées x et y près, on ferme V21 et on ouvre V22 (Figure 4).

Suivant un aspect de l'invention, on ouvre la vanne V22 avant l'instant 2T/3, à savoir à un instant t1 qui précède 2T/3 de Δt. La séquence est alors celle illustrée sur les Figures 5 à 7 :
- De T/3 à t1 (Figure 5), la pompe à vide 3 n'est reliée qu'à l'adsorbeur A1. A l'instant t1, la pression dans A1 est sensiblement Pm, tandis que l'adsorbeur A2, qui termine l'étape (a) de production, est à la pression haute PM.
- De t1 à 2T/3 (Figure 6), la pompe à vide est reliée aux deux adsorbeurs A1 et A2. Il se produit donc une brève décompression à contre-courant de A2, à la fois vers A1, qui subit donc une brève première repressurisation à contre-courant, et vers la pompe à vide. Cette brève repressurisation est réalisée essentiellement avec de l'air contenu dans la zone d'entrée de l'adsorbeur A2, c'est-à-dire dans le volume libre de distribution situé à l'amont des adsorbants et dans les espaces libres du premier lit (ou de la première zone dans le cas d'un lit unique) servant à arrêter l'eau et le CO2 de l'eau. Les recherches menées par la demanderesse ont permis de constater que cette repressurisation partielle à l'air n'avait pas d'impact négatif sur les performances du cycle.
- A partir de l'instant 2T/3, la pompe à vide n'est reliée qu'à l'adsorbeur A2, qui est ainsi purgé.

On voit donc que l'aspiration de la pompe à vide est en permanence reliée à au moins un adsorbeur, y compris pendant les phases de commutation d'un adsorbeur à un autre. En d'autres termes, la pompe à vide ne pompe à aucun instant sur la seule ligne d'évacuation 4, et son aspiration se trouve en permanence à une pression voisine de la pression théorique correspondant à une manoeuvre des vannes infiniment rapide.

Il en résulte que le pic de dépression ΔP de la courbe C1 de la Figure 3 est pratiquement supprimé, et que la courbe de pression réelle devient la courbe C3, qui est très voisine de la courbe théorique C2.

La modification du cycle de la Figure 2 décrit plus haut est illustrée sur la Figure 2A : de t1 à 2T/3, on a introduit une brève étape supplémentaire de première repressurisation à co-courant au moyen de gaz provenant d'un autre adsorbeur en fin de l'étape de production (a). Cette dernière se termine donc par une brève étape supplémentaire, de même durée Δt, dans laquelle de l'air passe de l'entrée de l'autre adsorbeur à celle de l'adsorbeur en question.

Le cycle de la Figure 2A correspond au cas de la Figure 4A, ou la vanne V41 est ouverte à l'instant 2T/3 comme dans le cycle connu, pour démarrer à cet instant l'étape de repressurisation (c).

En variante (Figures 4B et 2B), la vanne V41 peut également être ouverte avant 2T/3, en particulier à t1. La repressurisation à contre-courant par de l'oxygène commence alors dans A1, simultanément avec la première repressurisation à co-courant par de l'air. Ceci permet de limiter les effets négatifs que peut avoir, suivant le cycle, l'introduction d'air à trop basse pression dans un adsorbeur quant à l'avancée du front d'impuretés dans les adsorbants.

Les Figures 5 à 7 illustrent schématiquement la séquence d'opérations correspondantes, qui se comprend immédiatement à la vue de ces figures et des explications qui précèdent.

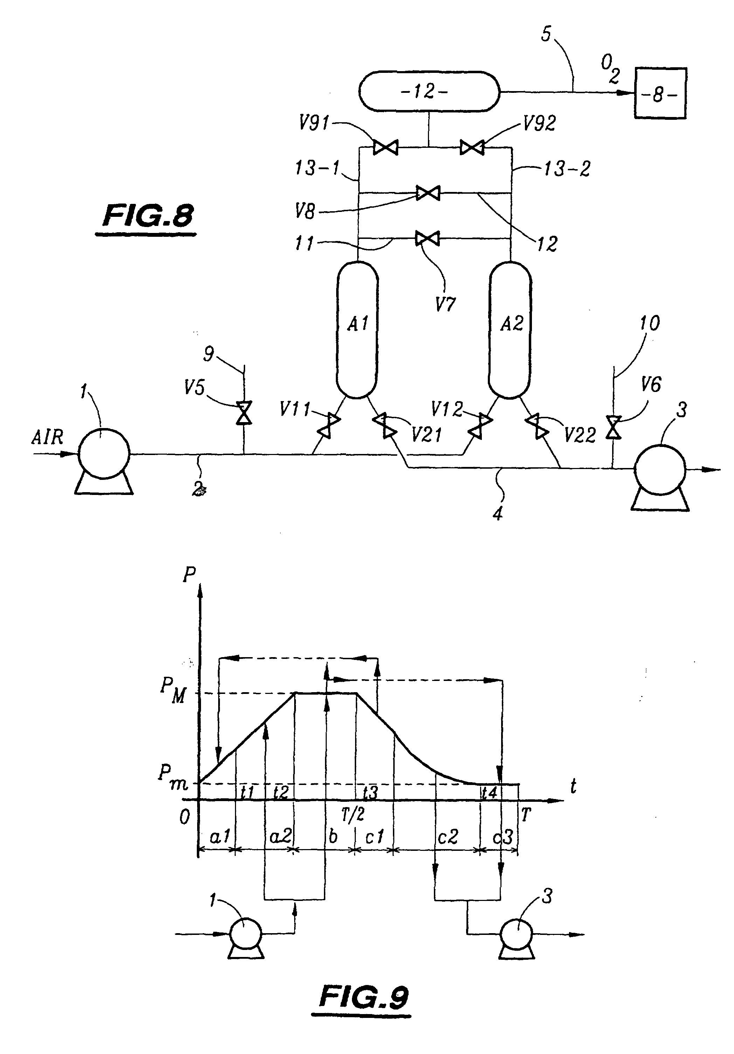

L'installation représentée à titre d'exemple sur la Figure 8 est du type MPSA à deux adsorbeurs A1 et A2. On retrouve les éléments 1 à 4, V11, V12, V21, V22 et 8 de la Figure 1, à ceci près que la soufflante est ici remplacée par un compresseur permettant d'assurer la production d'oxygène sous une pression haute PM nettement supérieure à la pression atmosphérique.

L'installation comprend également un piquage 9 de mise à l'air du refoulement du compresseur 1, équipé d'une vanne V5, et un piquage 10 de mise à l'air de l'aspiration de la pompe à vide 3, équipé d'une vanne V6. Les sorties supérieures des adsorbeurs sont reliées en parallèle par une conduite d'équilibrage 11 munie d'une vanne V7 et par une conduite d'élution 12 munie d'une vanne V8. De plus, ces sorties sont reliées à une capacité-tampon 12 par des conduites respectives 13-1 et 13-2 équipées de vannes respectives V91 et V92. La capacité 12 permet d'assurer une production d'oxygène en continu à la pression PM.

La Figure 9 représente de manière analogue à la Figure 2 un cycle classique mis en oeuvre au moyen de cette installation, entre la pression haute PM, typiquement de l'ordre de 1,5 bar, et une pression basse Pm, typiquement de l'ordre de 400 mbar.

Ce cycle, qui sera décrit pour l'adsorbeur A1 et qui, pour l'adsorbeur A2, se déduit par décalage dans le temps de T/2, comporte successivement les étapes principales suivantes.
(a1) De l'instant 0 à un instant t1, une étape de première recompression à contre-courant par équilibrage de pressions avec l'autre adsorbeur en cours d'étape (c1) de première décompression à co-courant.
(a2) De t1 à t2<T/2, une étape de recompression finale à co-courant au moyen d'air atmosphérique.
(b1) De t2 à T/2, une étape de production, au cours de laquelle de l'air est introduit à l'entrée de l'adsorbeur et de l'oxygène de production est soutiré à sa sortie. Au cours de cette étape, qui est sensiblement isobare à la pression haute PM, de l'oxygène de production est prélevé et envoyé à la sortie de l'autre adsorbeur en cours d'étape de purge/élution (c3) décrite plus loin.
(c1) De T/2 à t3, une étape de première décompression à co-courant par équilibrage de pressions avec l'autre adsorbeur en cours d'étape (a1) décrite ci-dessus.
. (c2) De t3 à t4<T, une étape de décompression à contre-courant par pompage jusqu'à la pression basse Pm du cycle.
(c3) De t4 à T, une étape de purge/élution sensiblement isobare, au cours de laquelle de l'oxygène de production est introduit à la sortie de l'adsorbeur tandis que le pompage à contre-courant est poursuivi.

Un débit constant d'oxygène est soutiré de la capacité 12 en tant que débit de production.

Pendant chacune des étapes (a1) et (c1), le compresseur d'air 1 n'est pas utilisé. Le débit comprimé est mis à l'air par l'intermédiaire de la vanne V5. La consommation énergétique de la machine est alors minimale.

On observe cependant au passage de l'étape (b) à l'étape (c1), pour des raisons analogues à ce qui a été expliqué plus haut, une surconsommation énergétique.

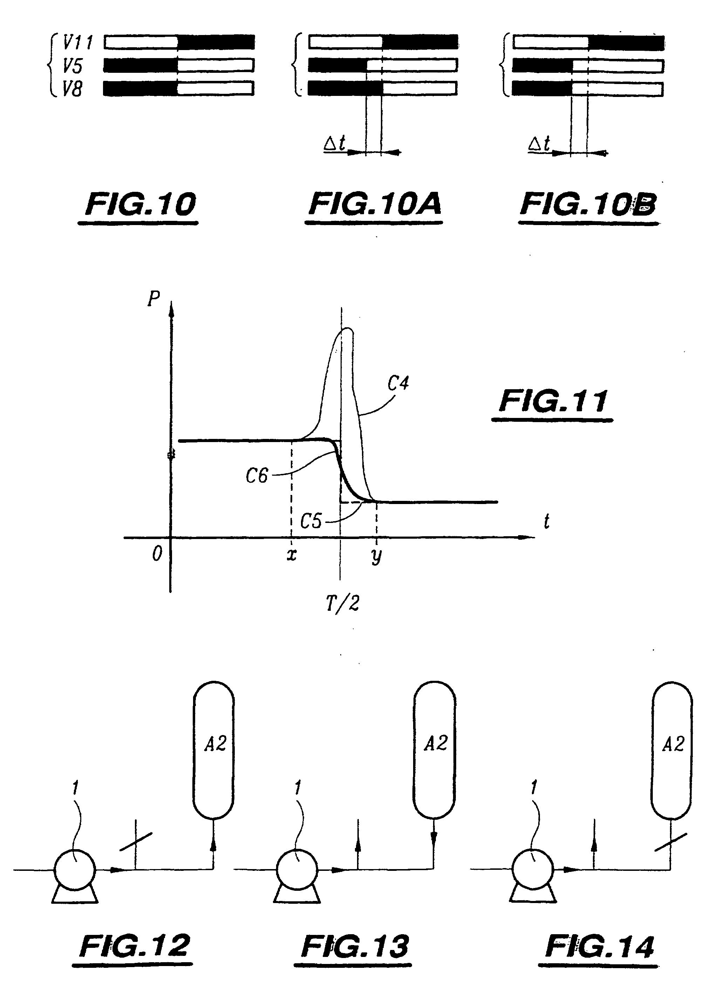

Un enregistrement rapide de la pression fait apparaître un pic de pression haute durant cette phase transitoire. Ainsi, comme représenté sur la Figure 11, la courbe de la pression réelle C4 s'écarte là encore de la pression théorique C5 avec les mêmes désavantages que précédemment (surconsommation énergétique, effort mécanique plus important).

En effet, la séquence normale (Figure 10) consiste à fermer la vanne V11 puis à ouvrir la vanne V5. De ce fait, la ligne 2, de faible volume par rapport aux adsorbeurs, se trouve comprimée à une pression supérieure à la pression normale de service.

Pour les mêmes raisons que précédemment, ce phénomène devient de plus en plus significatif lorsque l'on réduit sensiblement la durée de cycle.

Suivant un aspect de l'invention, on ouvre la vanne V5 avant de fermer la vanne V11, comme représenté sur la Figure 10A. Ce faisant, on met en communication pendant une courte période Δt l'adsorbeur A1 à la pression haute du cycle avec la pression atmosphérique. On crée ainsi une brève étape de première dépressurisation partielle de l'adsorbeur A1 à contre-courant.

La séquence correspondante de circulation des débits est illustrée sur les Figures 12 à 14.

La courbe de pression de refoulement du compresseur d'air devient alors la courbe C6 de la Figure 11, pratiquement dépourvue de tout pic de pression.

On comprend que des phénomènes analogues, et un remède correspondant, peuvent être décrits vis-à-vis des commutations du type V5-V12, V21-V6 et V6-V22.

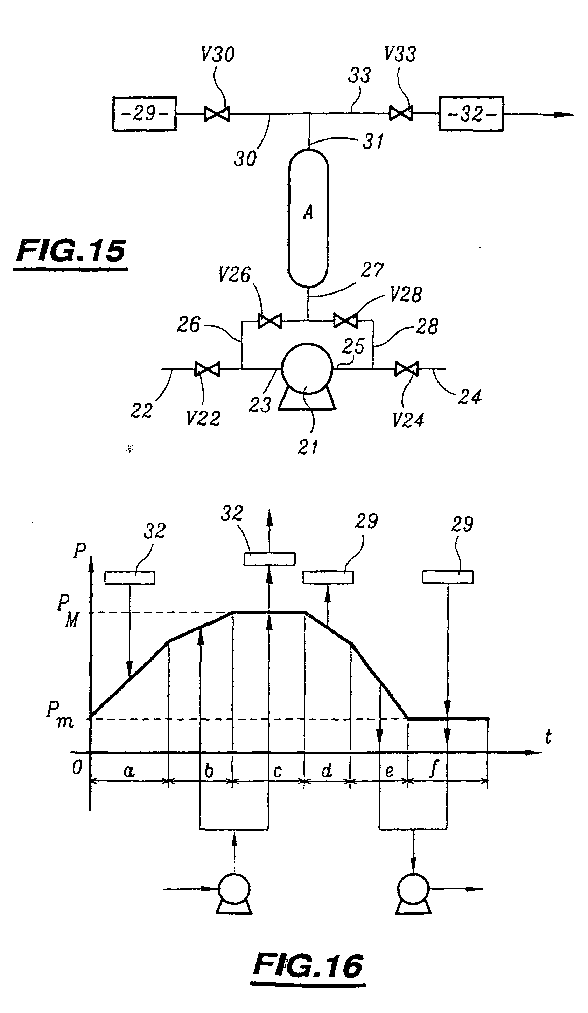

Les Figures 15 à 22A illustrent l'application de l'invention à une installation du type monoadsorbeur. Cette installation (Figure 15) comprend essentiellement : un adsorbeur unique A; une machine de compression 21 à un seul sens de rotation formant à la fois compresseur d'air et pompe à vide; une conduite d'entrée d'air 22 reliée à une borne 23 de la machine 21 et équipée d'une vanne V22; une conduite d'évacuation 24 reliée à l'autre borne 25 de la machine et équipée d'une vanne V24; une conduite 26 équipée d'une vanne V26, reliant la borne 23 à l'entrée inférieure 27 de l'adsorbeur; une conduite 28 équipée d'une vanne V28, reliant la borne 25 à l'entrée 27; une capacité d'élution 29; une conduite d'élution 30 équipée d'une vanne V30 et reliant la capacité 29 à la sortie supérieure 31 de l'adsorbeur; une capacité de production 32; et une conduite de production 33 équipée d'une vanne V33 et reliant la capacité 32 à la sortie 32.

La Figure 16 illustre de la même manière que précédemment le cycle mis en oeuvre au moyen de l'installation de la Figure 15. Ce cycle comprend successivement les étapes suivantes :
(a) Une étape de première recompression à contre-courant au moyen d'oxygène prélevé dans la capacité 32.
(b) Une étape de repressurisation finale à co-courant au moyen d'air atmosphérique.
(c) Une étape de production sensiblement isobare à la pression haute PM du cycle. Au cours de cette étape, l'oxygène de production est envoyé à la capacité 32.
(d) Une étape de première décompression à co-courant, le gaz issu de l'adsorbeur étant envoyé à la capacité 29.
(e) Une étape de décompression finale à contre-courant par pompage, jusqu'à la pression basse Pm du cycle.
(f) Une étape de purge/élution sensiblement isobare, au cours de laquelle de l'oxygène est envoyé à la sortie de l'adsorbeur depuis la capacité 29 tandis que le pompage à contre-courant se poursuit.

Un débit constant d'oxygène est soutiré de la capacité 32 en tant que débit de production.

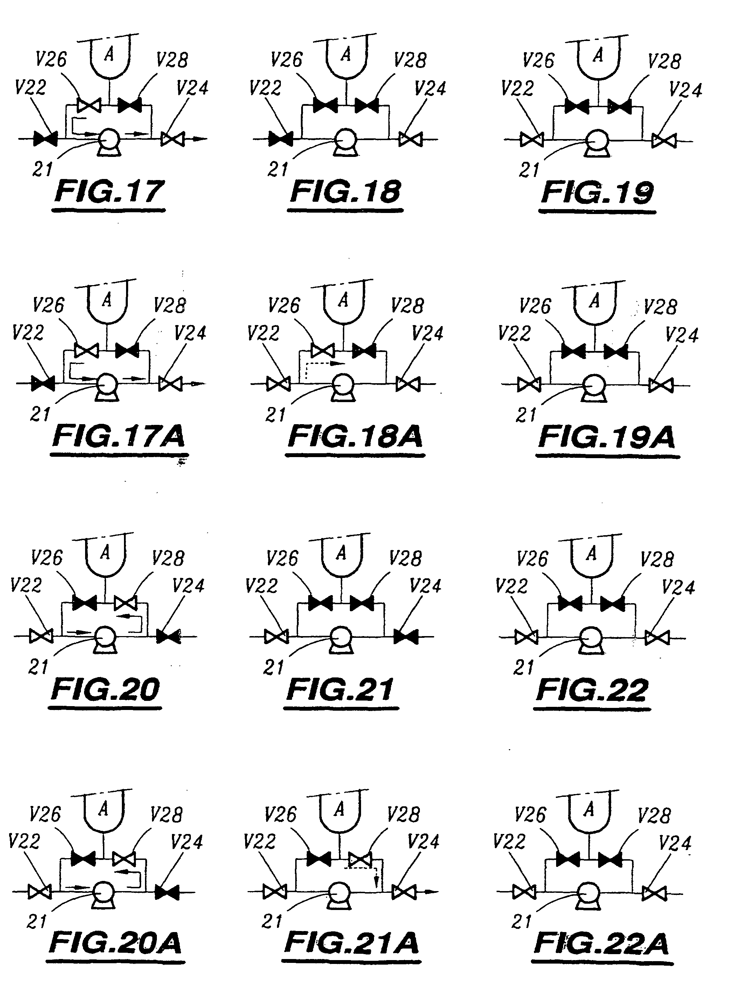

On remarque que pendant les étapes (a) de recompression à contre-courant et (d) de décompression à co-courant, la machine 21 n'intervient pas dans le cycle. Elle est alors mise à l'air via la conduite 24. Pour cela, le passage de l'étape (f) à l'étape (a) s'effectue classiquement comme illustré sur les Figures 17 à 19, où les vannes sont représentées en blanc lorsqu'elles sont ouvertes et en noir lorsqu'elles sont fermées :
- Pendant l'étape (f), les vannes V26 et V24 sont ouvertes tandis que les vannes V22 et V28 sont fermées (Figure 17). Puis :
   - on ferme la vanne 26 (Figure 18), puis
   - on ouvre la vanne 24, ce qui réalise la mise à l'air de la machine 21 (Figure 19).

Le pic de dépression qui apparaît pendant la phase intermédiaire de la Figure 18 est pratiquement supprimé, avec les inconvénients correspondants, en ouvrant la vanne V22 (Figure 18A) avant de fermer la vanne V26 (Figure 19A). On produit ainsi un début de repressurisation à co-courant de l'adsorbeur qui vient d'être purgé à la basse pression du cycle, comme illustré en trait mixte sur la Figure 18A.

De même, les Figures 20 à 22 illustrent le passage classique de l'étape (c) à l'étape (d) :
- Pendant l'étape (c), les vannes V22 et V28 sont ouvertes et les vannes V26 et V24 sont fermées (Figure 20). Puis
   - on ferme la vanne V28 (Figure 21), puis
   - on ouvre la vanne V24, ce qui réalise la mise à l'air de la machine 21 (Figure 22).

De même, le pic de pression qui apparaît pendant la phase intermédiaire de la Figure 18 est pratiquement supprimé, avec les inconvénients correspondants, en ouvrant la vanne V24 (Figure 21A) avant de fermer la vanne V28 (Figure 22A). On produit ainsi un début de dépressurisation à contre-courant de l'adsorbeur à la pression haute PM, comme illustré en traits mixtes sur la Figure 21A.

Le mode de manoeuvre des vannes décrit ci-dessus dans le cas de plusieurs cycles et installations particuliers peut s'appliquer à toutes les unités PSA, MPSA ou PSA comportant un nombre quelconque d'adsorbeurs N ≥ 1. On peut l'utiliser, de façon générale, pour éviter les surconsommations d'énergie lors de la commutation d'une machine de compression (compresseur, soufflante ou pompe à vide) d'un adsorbeur à un autre adsorbeur ou d'un d'adsorbeur à l'atmosphère environnante ou vice versa.

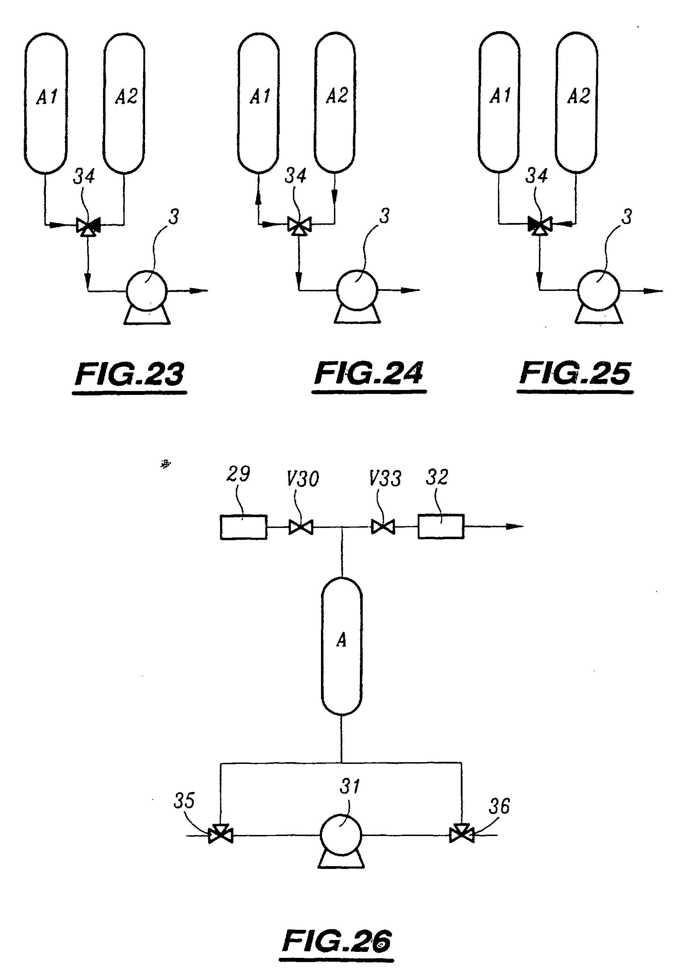

Ce mode de manoeuvre peut être réalisé au moyen d'une vanne trois-voies, comme représenté sur les Figures 23 à 25 dans le cas de la commutation d'une pompe à vide d'un adsorbeur A1 (Figure 23) à un autre adsorbeur A2 (Figure 25). Pour cela, pendant une étape intermédiaire de la commutation, on ouvre les trois voies de la vanne (Figure 24).

La Figure 26 illustre de même l'utilisation de deux vannes trois-voies dans le cas de l'installation de la Figure 15, pour la commutation de la machine 21 entre l'adsorbeur et l'atmosphère environnante, en lieu et place d'une part des vannes V22 et V26 (vanne trois-voies 35), et d'autre part des vannes V24 et V28 (vanne trois-voies 36).

Dans ces variantes, il faut entendre par "vanne trois-voies" tout type de distributeur de fluides permettant, dans l'une de ses positions de service, la mise en communication simultanée des trois espaces qu'il relie, et, dans deux autres positions de service, la mise de l'un de ces trois espaces en communication avec l'un ou l'autre des deux autres espaces.

Un tel distributeur peut notamment être constitué par une vanne trois-voies proprement dite, ou par un distributeur trois-voies à tiroir coulissant ou rotatif.

Les séquences d'ouverture-fermeture de l'invention peuvent aussi s'appliquer de façon bénéfique, quoique pour d'autres raisons, à la commutation d'un compresseur d'oxygène 37, par exemple comme représenté sur la Figure 1, d'un adsorbeur à un autre par manoeuvre des vannes V4i. Dans ce cas, l'ouverture prématurée de la seconde vanne de production évite la mise en dépression de l'aspiration de ce compresseur, et donc les risques d'entrée d'air et d'humidité dans le circuit oxygène.

En variante, dans chaque cas, il peut, dans le cadre de l'invention, y avoir un léger chevauchement des temps d'ouverture/fermeture entre les vannes ou les voies. concernées par l'invention, l'essentiel étant que la seconde vanne ou voie en question commence son ouverture avant la fin de la fermeture de l'autre vanne ou voie considérée.

## Revendications

1. Procédé se séparation par adsorption d'un mélange gazeux dans au moins un adsorbeur, par mise en oeuvre d'un cycle de variation de pression comportant une succession d'étapes au moyen d'au moins une machine de compression (1,3 ;21) ayant une borne sélectivement connectable à l'adsorbeur, procédé dans lequel, à au moins un instant du cycle, la bome de machine de compression (1,3;21) est commutée d'un premier espace qui se trouve à une première pression P1 à un deuxième espace qui se trouve à une deuxième pression P2 nettement différente de la première pression P1, et où ladite commutation comporte une opération intermédiaire dans laquelle ladite borne est mise temporairement en communication simultanément avec le premier espace et avec le deuxième espace.

2. Procédé suivant la revendication 1, **caractérisé en ce que** la durée de ladite opération intermédiaire est au plus égale au tiers, et de préférence comprise entre 1/3 et 1/50^{ème}, de la plus courte des étapes du cycle qu'elle relie.

3. Procédé suivant l'une des revendications précédentes, **caractérisé en ce que** l'un desdits espaces est un volume dudit mélange gazeux à séparer.

4. Procédé suivant l'une des revendications précédentes, **caractérisé en ce que** l'un au moins desdits espaces est une capacité de stockage de gaz.

5. Procédé suivant l'une des revendications précédentes, **caractérisé en ce que** l'un au moins desdits espaces est un premier adsorbeur (A1 à A3; A1, A2; A) qui, pendant ladite opération intermédiaire, communique avec la borne de la machine (1,3 ;21).

6. Procédé suivant la revendication 5, **caractérisé en ce que** pendant ladite opération intermédiaire, ledit premier adsorbeur (A1 à A3; A1, A2) est également mis en communication avec un troisième espace (A1 à A3; A1, A2).

7. Procédé suivant la revendication 6, **caractérisé en ce que** ledit troisième espace est un autre adsorbeur (A1 à A3; A1, A2) qui se trouve à une pression différente de celle dudit premier adsorbeur (A1 à A3 ; A1, A2).

8. Procédé suivant l'une des revendications précédentes, **caractérisé en ce que** la machine (1,3) est une soufflante ou un compresseur d'air, ou une pompe à vide, à une seule fonction.

9. Procédé suivant l'une des revendications 1 à 7, **caractérisé en ce que** la machine (21) est adaptée pour fonctionner en compresseur d'air ou en pompe à vide suivant les étapes du cycle.

10. Procédé suivant l'une des revendications 1 à 9, **caractérisé en ce que** ladite commutation s'effectue par une séquence programmée d'ouverture/fermeture de voies reliant ladite borne aux dits premier et deuxième espaces.

11. Procédé suivant la revendication 10, **caractérisé en ce que** ladite commutation s'effectue par fermeture d'une première vanne deux-voies et ouverture d'une deuxième vanne deux-voies, et ladite opération intermédiaire par ouverture de la deuxième vanne deux-voies avant fermeture de la première vanne deux-voies.

12. Procédé suivant la revendication 10, **caractérisé en ce que** ladite commutation s'effectue par fermeture d'une première voie d'une vanne trois-voies et ouverture d'une deuxième voie de cette vanne trois-voies, la troisième voie de cette vanne trois-voies étant ouverte, et ladite opération intermédiaire par ouverture de la deuxième voie de la vanne trois-voies avant la fermeture de ladite première voie.

13. Procédé suivant l'une des revendications précédentes, où le mélange gazeux à séparer est de l'air atmosphérique.

## Patentansprüche

1. Verfahren zur Auftrennung eines Gasgemisches durch Adsorption in mindestens einem Adsorber durch Anwendung eines Druckwechselzyklus, der eine Abfolge von Phasen umfasst, mittels einer Kompressionsmaschine (1,3;21), die einen selektiv an den Adsorber anschließbaren Anschluss hat, wobei bei dem Verfahren an mindestens einem Moment des Zyklus der Anschluss der Kompressionsmaschine (1,3;21) umgeschaltet wird von einem ersten Raum, der sich bei einem ersten Druck P1 befindet, auf einen zweiten Raum, der sich bei einem zweiten Druck P2, der vom ersten Druck P1 deutlich verschieden ist, befindet, und wobei das Umschalten einen Übergangszustand umfasst, bei dem der Anschluss vorübergehend gleichzeitig mit dem ersten Raum und dem zweiten Raum in Verbindung steht.

2. Verfahren nach Anspruch 1, **dadurch gekennzeichnet, dass** die Dauer des Übergangszustandes höchstens ein Drittel, und vorzugsweise zwischen 1/3 und 1/50 der kürzesten der Phasen des Zyklus, die er verbindet, ausmacht.

3. Verfahren nach einem der vorhergehenden Ansprüche, **dadurch gekennzeichnet, dass** einer der Räume ein Volumen des zu trennenden Gasgemisches ist.

4. Verfahren nach einem der vorhergehenden Ansprüche, **dadurch gekennzeichnet, dass** mindestens einer der Räume einen Gasvorrat aufnehmen kann.

5. Verfahren nach einem der vorhergehenden Ansprüche, **dadurch gekennzeichnet, dass** mindestens einer der Räume ein erster Adsorber (A1 bis A3; A1,A2; A) ist, der während des Übergangszustands mit dem Anschluss der Maschine (1,3;21) in Verbindung steht.

6. Verfahren nach Anspruch 5, **dadurch gekennzeichnet, dass** während des Übergangszustands der erste Adsorber (A1 bis A3; A1, A2) auch mit einem dritten Raum (A1 bis A3; A1, A2) in Verbindung steht.

7. Verfahren nach Anspruch 6, **dadurch gekennzeichnet, dass** der dritte Raum ein anderer Adsorber (A1 bis A3; A1, A2) ist, der sich bei einem anderen Druck als der erste Adsorber (A1 bis A3; A1, A2) befindet.

8. Verfahren nach einem der vorhergehenden Ansprüche, **dadurch gekennzeichnet, dass** die Maschine (1,3) ein Gebläse oder ein Luftkompressor oder eine Vakuumpumpe mit einer einzigen Funktion ist.

9. Verfahren nach einem der Ansprüche 1 bis 7, **dadurch gekennzeichnet, dass** die Maschine (21) geeignet ist, je nach der Phase des Zyklus als Luftkompressor oder als Vakuumpumpe zu arbeiten.

10. Verfahren nach einem der Ansprüche 1 bis 9, **dadurch gekennzeichnet, dass** das Umschalten durch eine programmierte Sequenz des Öffnens/Schließens der Wege erfolgt, die den Anschluss mit dem ersten und zweiten Raum verbinden.

11. Verfahren nach Anspruch 10, **dadurch gekennzeichnet, dass** das Umschalten durch das Schließen eines ersten zweiwegeventils und das Öffnen eines zweiten Zweiwegeventils erfolgt, und der Übergangszustand durch das Öffnen des zweiten Zweiwegeventils vor dem Schließen des ersten Zweiwegeventils.

12. Verfahren nach Anspruch 10, **dadurch gekennzeichnet, dass** das Umschalten durch das Schließen eines ersten Weges eines Dreiwegeventils und das Öffnen eines zweiten Weges dieses Dreiwegeventils erfolgt, wobei der dritte Weg dieses Dreiwegeventils offen ist, und der Übergangszustand durch das Öffnen des zweiten Wegs vor dem Schließen des ersten Wegs.

13. Verfahren nach einem der vorhergehenden Ansprüche, wobei das zu trennende Gasgemisch Umgebungsluft ist.

## Claims

1. Process for separating a gas mixture in at least one adsorber by adsorption, by carrying out a pressure variation cycle comprising a succession of steps by way of at least one compression machine (1,3; 21) having a terminal which can be selectively connected to the adsorber, in which process, at at least one instant in the cycle, the terminal of a compression machine (1, 3; 21) is switched from a first space which is at a first pressure P1 to a second space which is at a second pressure P2 significantly different from the first pressure P1, and/or the said switching comprises an intermediate operation in which the said terminal is temporarily brought simultaneously into communication with the first space and with the second space.

2. Process according to Claim 1, **characterized in that** the duration of the said intermediate operation is at most equal to one third, and preferably between 1/3 and 1/50th of the shorter of the steps of the cycle that it connects.

3. Process according to one of the preceding claims, **characterized in that** one of the said spaces is a volume of the said gas mixture.

4. Process according to one of the preceding claims, **characterized in that** at least one of the said spaces is a gas storage tank.

5. Process according to one of the preceding claims, **characterized in that** at least one of the said spaces is a first adsorber (A1 to A3; A1, A2; A) which, during the said intermediate operation, communicates with the terminal of the machine (1, 3; 21).

6. Process according to Claim 5, **characterized in that**, during the said intermediate operation, the said first adsorber (A1 to A3; A1, A2) is also brought into communication with a third space (A1 to A3; A1, A2).

7. Process according to Claim 6, **characterized in that** the said third space is another adsorber (A1 to A3; A1, A2) which is at a pressure different from that of the said first adsorber (A1 to A3; A1, A2).

8. Process according to one of the preceding claims, **characterized in that** the machine (1, 3) is an air compressor or blower, or a vacuum pump, with a single function.

9. Process according to one of Claims 1 to 7, **characterized in that** the machine (21) is designed to operate as an air compressor or as a vacuum pump, depending on the steps of the cycle.

10. Process according to one of Claims 1 to 9, **characterized in that** the said switching takes place by a programmed sequence of opening and closing of ways connecting the said terminal to the said first and second spaces.

11. Process according to Claim 10, **characterized in that** the said switching takes place by closing a first two-way valve and opening a second two-way valve, and the said intermediate operation takes place by opening the second two-way valve before closing the first two-way valve.

12. Process according to Claim 10, **characterized in that** the said switching takes place by closing a first way of a three-way valve and opening a second way of this three-way valve, the third way of this three-way valve being open, and the said intermediate operation taking place by opening the second way of the three-way valve before closing the said first way.

13. Process according to one of the preceding claims, in which the gas mixture to be separated is atmospheric air.
